# EUROPÄISCHE PATENTSCHRIFT

(11) **EP 0 918 117 B1**
(45) Veröffentlichungstag und Bekanntmachung des Hinweises auf die Patenterteilung: **03.03.2004**
(21) Anmeldenummer: 98121689.8
(22) Anmeldetag: 13.11.1998
(51) Int. Cl.: E04B 2/76, E04B 1/58, F16B 12/50

(54) **Anordnung mit einem Befestigungswinkel und zwei durch diesen verbundenen Profilstäben**
Arrangement with a fixing bracket joining two profiled section bars
Assaemblage de deux barres profilées au moyen d'une equerre de fixation

(30) Priorität: 19.11.1997 DE 19751165
(43) Veröffentlichungstag der Anmeldung: 26.05.1999
(73) Patentinhaber: ROBERT BOSCH GMBH, 70442 Stuttgart (DE)
(72) Erfinder: Benz, Albrecht, 70771 Leinfelden-Echterdingen (DE); Walther, Joerg, 70825 Korntal (DE); Koban, Johannes, 70178 Stuttgart (DE); Klemd, Olaf, 71706 Markgroeningen (DE); Breitenbücher, Armin, 73655 Pluederhausen (DE)
(74) Vertreter: Thürer, Andreas

(56) Entgegenhaltungen:
- WO-A-88/08940
- DE-A- 3 738 128
- DE-U- 29 704 977
- FR-A- 983 554
- US-A- 4 685 839
- BOSCH: "MECHANIK GRUNDELEMENTE" FLEXIBLE AUTOMATION,1996 - 1997, Seiten 3.1-3.25, XP002094146

## Beschreibung

### Stand der Technik

Die Erfindung geht von einer Anordnung mit zwei Profilstäben und einem Befestigungswinkel zum Verbinden der Profilstäbe entsprechend der Gattung des Anspruchs 1 aus. Derartige Befestigungswinkel sind in einer Vielzahl von Ausbildungsvarianten, beispielsweise aus dem Verkaufskatalog "Bosch, Flexible Automation, Mechanik Grundelemente, Jahrgang 1996/97, Seite 3-1 bis 3-25" bereits bekannt.

Zur Ausbildung von Trenn- oder Schutzwänden, die beispielsweise einen Gefahrenbereich vor unbefugtem Zutritt beziehungsweise Zugriff schützen sollen, sind die bekannten Befestigungswinkel an Stützprofilen angebracht, um Rahmenkonstruktionen beispielsweise in Form von Schutzgittern oder Schutzscheiben an diesen Stützprofilen zu befestigen. Die bekannten Befestigungswinkel haben diesbezüglich den Nachteil, daß die Rahmenkonstruktionen lediglich im wesentlichen in 90°- bzw. 180°-Stellung zu den Stützprofilen anordenbar sind. Beliebige Winkelstellungen sind aufgrund einer etwaigen Kollision der miteinander verbundenen Profilstäbe nur bedingt möglich.

Demgegenüber besteht die Aufgabe der Erfindung darin, eine Anordnung mit zwei Profilstäben und einem Befestigungswinkel zum Verbinden der Profilstäbe zu schaffen, um die als Trenn- oder Schutzwände konzipierten Rahmenkonstruktionen in beliebigen Winkelstellungen zueinander positionieren zu können.

Erfindungsgemäß wird die Aufgabe durch den kennzeichnenden Teil des Anspruchs 1 gelöst.

### Vorteile der Erfindung

Demgegenüber weist ein Befestigungswinkel mit den kennzeichnenden Merkmalen des Anspruchs 1 den Vorteil auf, daß die Rahmenkonstruktionen in nahezu beliebigen Winkelstellungen mit ihren Stützprofilen verbindbar sind, ohne daß der Aufbau und damit die Herstellung des Befestigungswinkels oder dessen Montage gegenüber bekannten Ausführungsvarianten erschwert ist. Der Befestigungswinkel ist kompatibel zu bekannten Ausführungsvarianten ausbildbar, so daß ein breiterer Anwendungsbereich abgedeckt wird.

Weitere Vorteile oder vorteilhafte Weiterbildungen der Erfindung ergeben sich aus den Unteransprüchen und der Beschreibung. So weist ein Befestigungswinkel, der mit Stützwänden entsprechend den Ansprüchen 2 bis 4 versehen ist, eine besonders hohe Stabilität auf, wodurch auch relativ schwere Rahmenkonstruktionen sicher und zuverlässig an den Stützprofilen fixierbar sind. Die Stützprofile lassen sich dadurch in großen Abständen zueinander positionieren. Dies spart Material- und Montagekosten für die Trennwände ein.

Durch Zentriereinrichtungen, die gemäß den Ansprüchen 5 und 6 lediglich am ersten der beiden Schenkel des Befestigungswinkels ausgebildet sind, und die mit Spiel in eine Längsnut der Stützprofile eingreifen, wird erreicht, daß der Befestigungswinkel zentrisch und verdrehsicher anordenbar ist und dabei eine Verschiebbarkeit in Richtung der Längsnut ermöglicht. Außerdem erlaubt es eine derartige Ausbildung, daß beidseitig, d.h. sowohl an der Außen- als auch an der Innenseite des zweiten Schenkels Profilstäbe anordenbar sind. Besonders kostengünstig ist der erfindungsgemäße Befestigungswinkel nach Anspruch 10 in einem Druckgußverfahren herstellbar.

### Zeichnung

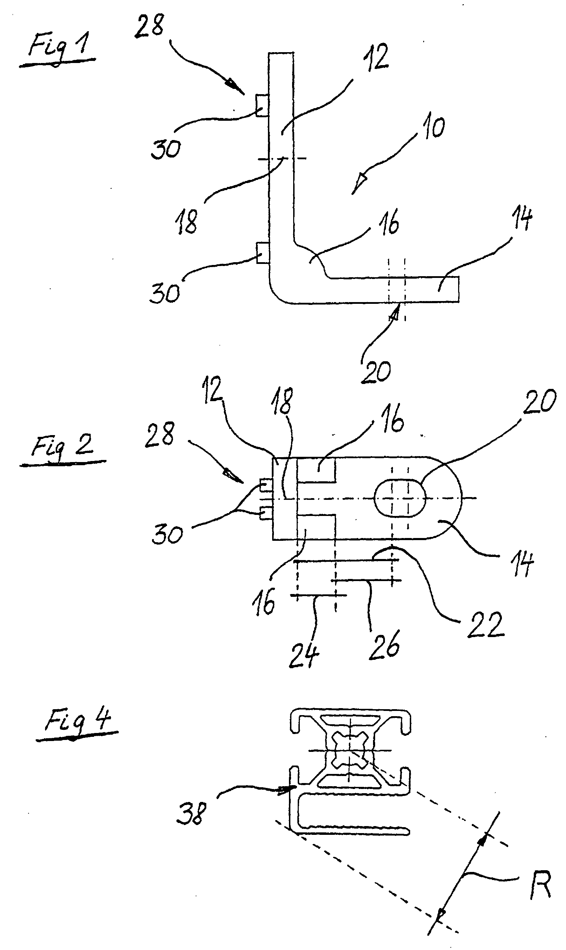

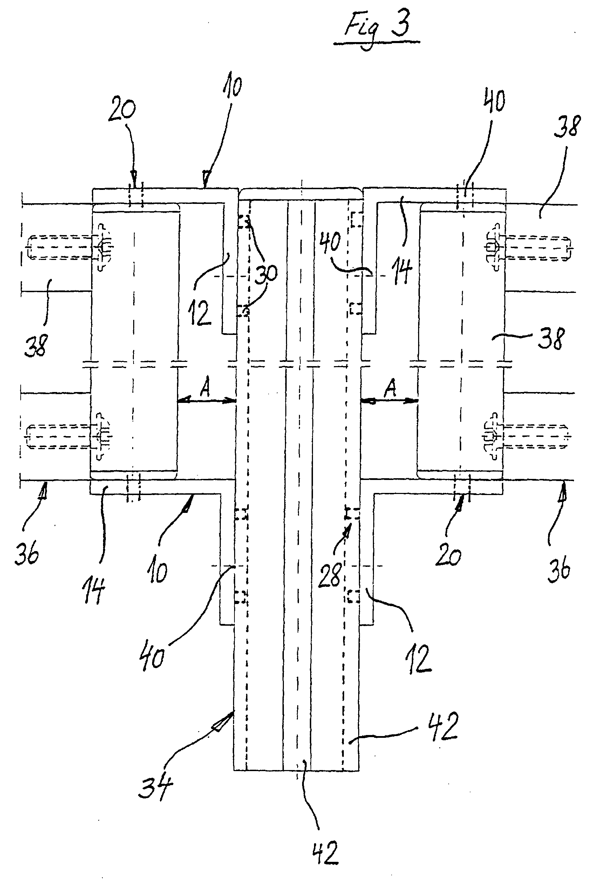

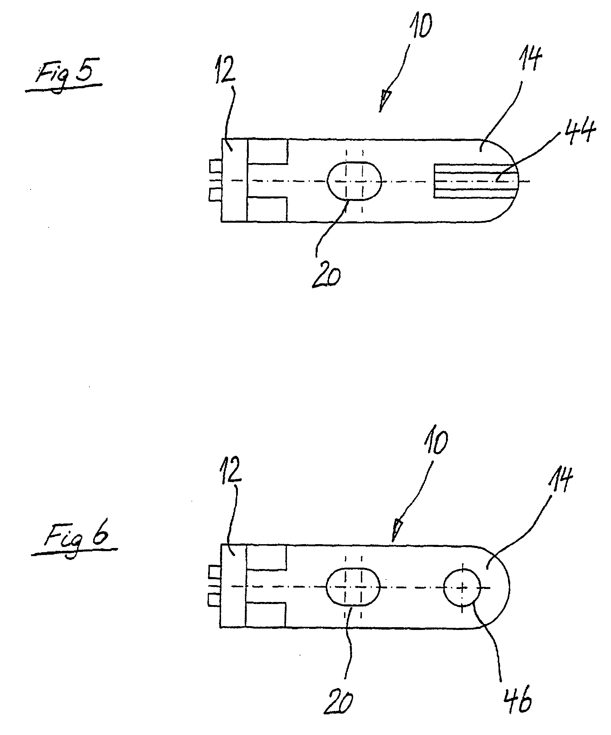

Ein Ausführungsbeispiel der Erfindung ist in der Zeichnung dargestellt und in der nachfolgenden Beschreibung näher erläutert. Figur 1 zeigt eine erste Ausführungsform eines erfindungsgemäßen Befestigungswinkels in einer Seitenansicht, Figur 2 den Befestigungswinkel nach Figur 1 in einer Draufsicht. In Figur 3 ist ein Anwendungsbeispiel für einen derartigen Befestigungswinkel bei einer Trenn- bzw. Schutzwand in einer Seitenansicht dargestellt; Figur 4 zeigt den Profilstab nach Figur 1 in einer beispielhaften Ausbildung im Querschnitt. In den Figuren 5 und 6 sind Weiterbildungen des erfindungsgemäßen Befestigungswinkels nach Figur 1 jeweils in der Draufsicht gezeigt.

### Beschreibung des Ausführungsbeispiels

Der in den Figuren 1 und 2 dargestellte Befestigungswinkel 10 weist einen ersten Schenkel 12 und einen zweiten Schenkel 14 auf. Diese beiden Schenkel 12, 14 sind mit jeweils einem ihrer Enden starr rechtwinklig miteinander verbunden. Die den miteinander verbundenen Enden gegenüberliegenden äußeren Enden der Schenkel 12, 14 sind halbkreisförmig abgerundet. Im Ausführungsbeispiel sind die beiden Schenkel 12, 14 beispielhaft gleich lang ausgebildet.

Die Übergangsstelle vom ersten Schenkel 12 zum zweiten Schenkel 14 ist exemplarisch durch zwei voneinander beabstandete Stützwände 16 verstärkt. Diese beiden Stützwände 16 schließen mit ihren voneinander abgewandten Außenseiten bündig mit den Stirnseiten des Befestigungswinkels 10 ab und haben eine konkav gerundete Außenkontur. Dadurch treten im belasteten Zustand des Befestigungswinkels 10 an den Übergängen von der Stützwand 16 zu den Schenkeln 12, 14 allenfalls unkritische Kerbwirkungen auf.

Des weiteren sind die beiden Schenkel 12, 14 mit Ausnehmungen versehen, die symmetrisch zu den Längsachsen der jeweiligen Schenkel 12, 14 angeordnet sind. Im Falle des ersten Schenkels 12 handelt es sich bei der Ausnehmung um eine Bohrung 18, während die Ausnehmung des zweiten Schenkels 14 als Langloch 20 ausgeführt ist.

Dieses Langloch 20 erstreckt sich in Ausdehnungsrichtung des zweiten Schenkels 14 und weist gegenüber der inneren Wandung des ersten Schenkels 12 einen Abstand 22 auf. Der Abstand 22 ist maßlich aus der Länge zweier Streckenabschnitte 24, 26 zusammengesetzt. Der erste Streckenabschnitt 24 entspricht der Länge der Stützwand 16 in Ausdehnungsrichtung des zweiten Schenkels 14, während der zweite Streckenabschnitt 26 dem Abstand zwischen dem Ende der Stützwand 16 und dem Bohrungsmittelpunkt der dem ersten Schenkel 12 zugewandten Bohrung des Langloches 20 entspricht. Dieser Streckenabschnitt 26 ist so bemessen, daß er länger als der größte Abstand R (Figur 4) eines am zweiten Schenkel 14 zu montierenden Profilstabs 38 ist. Dieser Profilstab 38 ist dadurch um seine Längsachse in beliebige Winkelstellungen gegenüber dem ersten Schenkel 12 und damit gegenüber einem mit diesem ersten Schenkel 12 verbundenen Profilstab verdrehbar, ohne dabei an den Stützwänden 16 des Befestigungswinkels 10 anzustoßen. Der Profilstab 38 ist in Figur 4 in einer beispielhaften Ausbilding in der Draufsicht und in Figur 3 in einer Seitenansicht dargestellt.

Eine Fixierung des Befestigungswinkels 10 an den Profilstäben erfolgt beispielsweise mittels Schrauben 40 (Figur 3), die die Bohrung 18 bzw. das Langloch 20 durchdringen. Das Langloch 20 des zweiten Schenkels 14 ermöglicht dabei eine Feinjustierung der beiden durch diesen Befestigungswinkel 10 miteinander verbundenen Profilstäbe.

An der Außenseite des ersten Schenkels 12 ist ferner eine Zentriereinrichtung 28 vorgesehen. Diese Zentriereinrichtung 28 wird von insgesamt vier nach außen abstehenden Fortsätzen 30 gebildet. Die Fortsätze 30 bilden die Ecken eines von ihnen aufgespannten Rechtecks und weisen beispielhaft eine quaderförmige Form auf. Da jeweils zwei Fortsätze 30 miteinander fluchten, sind in den Figuren 1 und 2 nur jeweils zwei der vier Fortsätze 30 erkennbar. Die Langseite des von den Fortsätzen 30 aufgespannten Rechtecks verläuft parallel zur Ausdehnungsrichtung des ersten Schenkels 12, die Schmalseite demzufolge senkrecht dazu. Das Maß der Langseite ist derart gewählt, daß durch die Fortsätze 30 eine zuverlässige Längsführung des Befestigungswinkels 10 in einer Nut des nicht dargestellten Profilstabs gewährleistet ist. Die Schmalseite ist so bemessen, daß zwischen der Zentriereinrichtung 28 und dieser Nut ein Spiel verbleibt, so daß der Befestigungswinkel 10 entlang der Nut längsverschiebbar ist.

Ein Anwendungsbeispiel für derartige Befestigungswinkel 10 ist in der Figur 3 dargestellt. Diese zeigt einen Abschnitt einer Trenn- oder Schutzwand, die ein auf dem Boden auf nicht dargestellte Weise verankerbares Stützprofil 34 aufweist. An diesem Stützprofil 34 sind zwei Rahmenkonstruktionen 36 unabhängig voneinander befestigt. Hierzu werden jeweils zwei Befestigungswinkel 10 verwendet, die übereinander an einer der Außenseiten des Stützprofils 34 verankert sind. Die Rahmenkonstruktionen 36 ihrerseits sind mittels Befestigungselementen 40, beispielsweise Schrauben oder Zapfen, mit den Befestigungswinkeln 10 verbunden.

Bei den Rahmenkonstruktionen 36 kann es sich beispielsweise um Gitter oder Scheiben handeln, die von einem aus Profilstäben 38 gebildeten Rahmen umschlossen sind. Diese Rahmenkonstruktionen 36 sind mit ihren parallel zur Längsachse des Stützprofils 34 verlaufenden Profilstäben 38 an den jeweils zweiten Schenkeln 14 der Befestigungswinkel 10 verankert. Das Langloch 20 in den Schenkeln 14 ermöglicht es dabei, den Abstand A zwischen dem Stützprofil 34 und den Profilstäben 38 an die Gegebenheiten des Montagefalls anzupassen. Dabei ermöglicht selbst der minimal einstellbare Abstand A, daß die Profilstäbe 38 gegenüber dem Stützprofil 34 in beliebigen Winkelstellungen verdrehbar sind. Die Rahmenkonstruktionen 36 lassen sich somit nicht nur in 90°- bzw. 180°-Stellung mit dem Stützprofil 34 verbinden.

Figur 3 zeigt des weiteren, daß die Fortsätze 30 der Zentriereinrichtung 28 an den Befestigungswinkeln 10 in Nuten 42 eingreifen, die an den Außenseiten des Stützprofils 34 ausgebildet sind. Damit wird eine längsverschiebbare zentrische Anordnung.der Befestigungswinkel 10 an den Stützprofilen 34 erreicht und gleichzeitig eine Verdrehsicherung der Befestigungswinkel 10 ermöglicht.

In Figur 4 ist beispielhaft ein Profilstab 38 in der Draufsicht dargestellt. In diese Ansicht ist der für den Streckenabschnitt 26 des Befestigungswinkels 10 maßgebende größte Abstand R dieses Profilstabs 38 eingezeichnet.

Figur 5 zeigt eine weitere Ausbildungsform eines Befestigungswinkels 10, bei dem der zweite Schenkel 14 über das Langloch 20 hinaus verlängert ist und an seiner dem zu montierenden Profilstab 38 zugewandten Auflagefläche ein Formelement 44 aufweist. Dieses Formelement 44 ist im Bereich des vom ersten Schenkel 12 abgewandten Endes des zweiten Schenkels 14 angeordnet und verläuft symmetrisch zu dessen Längsachse. Das Formelement 44 ist als Steg mit beispielsweise einem t-förmigen oder einem schwalbenschwanzförmigen Querschnitt ausgebildet und ist gegenüber dem Langloch 20 beabstandet. Dadurch ragt das Formelement 44 in die Nut 42 eines mit dem Befestigungswinkel 10 gekoppelten, waagerechten Profilstabs 38 einer Rahmenkonstruktion 36 hinein und stellt zwischen dieser Rahmenkonstruktion 36 und dem Stützprofil 34 einen Formschluß her, ohne die Anpassungsmöglichkeit des Abstandes A zwischen dem Stützprofil 34 und den Profilstäben 38 (Figur 3) an die Einsatzbedingungen zu beschränken.

Figur 6 zeigt einen Befestigungswinkel 10, dessen zweiter Schenkel 14 zur Anordnung einer Zusatzbohrung 46 über das Langloch 20 hinaus verlängert ist. Mittels dieser Zusatzbohrung 46 läßt sich, falls erforderlich, zwischen einer mittels eines Zapfens oder einer Stiftschraube in den Langlöchern 20 der unteren Befestigungswinkel 10 lagerbaren Rahmenkonstruktion 36 (Figur 3) und dem Befestigungswinkel 10 ein zusätzlicher Formschluß herstellen.

## Patentansprüche

1. Anordnung mit zwei Profilstäben (34, 38) und einem Befestigungswinkel (10) zum Verbinden der zwei Profilstäbe (34, 38), die jeweils eine Zentralbohrung und an wenigstens einer ihrer Außenseiten eine Längsnut (42) aufweisen, mit einem ersten Schenkel (12) und einem rechtwinklig dazu angeordneten zweiten Schenkel (14), die jeweils mit einer Ausnehmung versehen sind, durch die der Befestigungswinkel (10) mittels Befestigungselementen (40) mit den beiden Profilstäben (34, 38) verankerbar ist, wobei die Ausnehmung des ersten Schenkels (12) eine Bohrung (18) und die Ausnehmung des zweiten Schenkels (14) ein Langloch (20) ist und mit einer an der Außenseite wenigstens einer der Schenkel (12, 14) ausgebildeten Zentriereinrichtung (28), die in die Längsnut (42) des zugeordneten Profilstabs (34, 38) eingreift,
**dadurch gekennzeichnet, daß** der erste Schenkel (12) des Befestigungswinkels (10) an einer Längsseite des ersten Profilstabs (34) fixiert ist und daß der zweite Profilstab (38) mit seinen Stirnseiten am zweiten Schenkel (14) des Befestigungswinkels (10) angeordnet ist, so daß die Längsachsen der beiden Profilstäbe (34, 38) parallel zueinander verlaufen, wobei der Bohrungsmittelpunkt der dem ersten Schenkel (12) zugewandten Bohrung des Langlochs (20) des zweiten Schenkels (14) zum ersten Schenkel (12) einen Abstand (22) aufweist, der größer als der größte Abstand (R) des mit dem zweiten Schenkel (14) verbundenen Profilstabs (38) ist.

2. Anordnung nach Anspruch 1, **dadurch gekennzeichnet, daß** der zweite Profilstab (38) auf der dem ersten Schenkel (12) zugewandten als auch auf der davon abgewandten Seite des zweiten Schenkels (14) anordenbar ist und daß die beiden Profilstäbe (34, 38) zueinander einen nahezu beliebig großen Verdrehwinkel miteinander einschließen.

3. Anordnung nach Anspruch 1 oder 2, **dadurch gekennzeichnet, daß** die beiden Schenkel (12, 14) wenigstens eine gemeinsame Stützwand (16) aufweisen, die die einander zugewandten Innenseiten der Schenkel (12, 14) zumindest abschnittsweise miteinander verbindet und daß der Abstand (22) um die sich in Längsrichtung des zweiten Schenkels (14) erstreckende Ausdehnung der Stützwand (16) verlängert ist.

4. Anordnung nach Anspruch 3, **dadurch**
**gekennzeichnet, daß** zwei zueinander beabstandete Stützwände (16) vorhanden sind, deren voneinander abgewandte Seitenflächen bündig in die Stirnflächen des Befestigungswinkels (10) übergehen.

5. Anordnung nach einem der Ansprüche 3 oder 4,
**dadurch gekennzeichnet, daß** die Stützwände (16) eine nach außen abgerundete Außenkontur aufweisen.

6. Anordnung nach einem der Ansprüche 1 bis 5,
**dadurch gekennzeichnet, daß** die wenigstens eine Zentriereinrichtung (28) am ersten Schenkel (12) ausgebildet ist und mit Spiel in die Längsnut (42) des mit dem ersten Schenkel (12) verbundenen Profilstabs (38) eingreift.

7. Anordnung nach Anspruch 6, **dadurch**
**gekennzeichnet, daß** die Zentriereinrichtung (28) von vier, in einem Rechteck angeordneten Zentrierfortsätzen (30) gebildet ist.

8. Anordnung nach einem der Ansprüche 1 bis 7,
**dadurch gekennzeichnet, daß** der Befestigungswinkel (10) ein einteilig ausgebildetes Druckgußteil ist.

9. Trennwand mit wenigstens einem Stützprofil (38) und wenigstens einer an dem Stützprofil (34) mittels wenigstens einer Anordnung nach einem der Ansprüche 1 bis 8 angeordneten Rahmenkonstruktion (36).

## Claims

1. Arrangement with two profiled section bars (34, 38) and a fixing bracket (10) for joining the two profiled section bars (34, 38), which respectively have a central bore and a longitudinal groove (42) on at least one of their outer sides, with a first leg (12) and a second leg (14), arranged at right angles to the latter, which are respectively provided with a clearance through which the fixing bracket (10) can be anchored to the two profiled section bars (34, 38) by means of fixing elements (40), the clearance in the first leg (12) being a bore (18) and the clearance in the second leg (14) being a slot (20), and with a centring device (28) which is formed on the outer side of at least one of the legs (12, 14) and engages in the longitudinal groove (42) of the assigned profiled section bar (34, 38), **characterized in that** the first leg (12) of the fixing bracket (10) is fixed on a longitudinal side of the first profiled section bar (34) and **in that** the second profiled section bar (38) is arranged with its end faces against the second leg (14) of the fixing bracket (10), so that the longitudinal axes of the two profiled section bars (34, 38) run parallel to each other, the centre point of the bore towards the first leg (12) of the slot (20) in the second leg (14) from the first leg (12) having a distance (22) which is greater than the greatest distance (R) of profiled section bar (38) joined to the second leg (14).

2. Arrangement according to Claim 1, **characterized in that** the second profiled section bar (38) can be arranged on the side of the second leg (14) facing the first leg (12) and on the side facing away from it and **in that** the two profiled section bars (34, 38) form in relation to each other an angle of twist of virtually any desired size.

3. Arrangement according to Claim 1 or 2, **characterized in that** the two legs (12, 14) have at least one common supporting wall (16), which joins the mutually facing inner sides of the legs (12, 14) to each other at least over certain portions and **in that** the distance (22) is lengthened by the extent of the supporting wall (16) extending in the longitudinal direction of the second leg (14).

4. Arrangement according to Claim 3, **characterized in that** there are two spaced-apart supporting walls (16), the side faces of which, facing away from each other, merge flush with the end faces of the fixing bracket (10).

5. Arrangement according to either of Claims 3 and 4, **characterized in that** the supporting walls (16) have an outer contour that is outwardly rounded off.

6. Arrangement according to one of Claims 1 to 5, **characterized in that** the at least one centring device (28) is formed on the first leg (12) and engages with play in the longitudinal groove (42) of the profiled section bar (38) joined to the first leg (12).

7. Arrangement according to Claim 6, **characterized in that** the centring device (28) is formed by four centring continuations (30) arranged in a rectangle.

8. Arrangement according to one of Claims 1 to 7, **characterized in that** the fixing bracket (10) is a die casting formed as one part.

9. Partition with at least one supporting profiled section (38) and at least one frame structure (36) arranged on the supporting profiled section (34) by means of at least one arrangement according to one of Claims 1 to 8.

## Revendications

1. Ensemble comprenant deux profilés (34, 38) et une cornière de fixation (10) pour assembler les deux profilés (34, 38), qui présentent respectivement un perçage central et, au niveau d'au moins l'une de ses faces extérieures, une rainure longitudinale (42), avec une première branche (12) et une deuxième branche (14) disposée à l'angle droit de celle-ci, présentant chacune un évidement dans lequel la cornière de fixation (10) peut être ancrée à l'aide d'éléments de fixation (40) aux deux profilés (34, 38), l'évidement de la première branche (12) étant un perçage (18) et l'évidement de la deuxième branche (14) un trou oblong (20), et avec un dispositif de centrage (28) formé à la face extérieure d'au moins l'une des branches (12, 14) qui s'engage dans la rainure longitudinale (42) du profilé (34, 38) associé,
**caractérisé en ce que**
la première branche (12) de la cornière de fixation (10) est fixée à une face longitudinale du premier profilé (34), et **en ce que** le deuxième profilé (38), par ces faces frontales, est disposé sur la deuxième branche (14) de la cornière de fixation (10), de telle sorte que les axes longitudinaux des deux profilés (34, 38) s'étendent en parallèle l'un à l'autre, le point central de perçage du perçage du trou oblong (20) de la deuxième branche (14) en regard de la première branche (12) présentant une distance (22) par rapport à la première branche (12), qui est plus importante que la distance (R) la plus grande du profilé (38) relié à la deuxième branche (14).

2. Ensemble selon la revendication 1,
**caractérisé en ce que**
le deuxième profilé (38) peut être disposé sur la face en regard de la première branche (12) mais également sur la face opposée à la deuxième branche (14), et **en ce que** les deux profilés (34, 38) enferment l'un avec l'autre un angle de torsion d'une valeur quelconque.

3. Ensemble selon la revendication 1 ou 2,
**caractérisé en ce que**
les deux branches (12, 14) présentent au moins une paroi d'appui (16) commune, qui relie l'une à l'autre, du moins par sections, les faces intérieures des branches (12, 14) en regard l'une de l'autre, et **en ce que** la distance (22) est prolongée de l'étendue de la paroi d'appui (16) s'étendant dans le sens longitudinal de la deuxième branche (14).

4. Ensemble selon la revendication 3,
**caractérisé en ce qu'**
il existe deux parois d'appui (16) distancées l'une de l'autre, dont les faces latérales opposées l'une à l'autre passent par complémentarité de forme dans les faces frontales de la cornière de fixation (10).

5. Ensemble selon l'une des revendications 3 ou 4,
**caractérisé en ce que**
les parois d'appui (16) présentent un contour extérieur arrondi vers l'extérieur.

6. Ensemble selon l'une des revendications 1 à 5,
**caractérisé en ce que**
l'au moins un dispositif de centrage (28) est formé sur la première branche (12) et s'engage avec jeu dans la rainure longitudinale (42) du profilé (38) relié à la première branche (12).

7. Ensemble selon la revendication 6,
**caractérisé en ce que**
le dispositif de centrage (28) est formé par quatre appendices de centrage (30) disposés en rectangle.

8. Ensemble selon l'une des revendications 1 à 7,
**caractérisé en ce que**
la cornière de fixation (10) est un élément moulé sous pression d'une seule pièce.

9. Paroi de séparation avec au moins un profilé d'appui (38) et au moins une structure de cadre (36) disposé sur le profilé d'appui (34) à l'aide d'au moins un ensemble selon l'une des revendications 1 à 8.
